# EUROPEAN PATENT APPLICATION

(11) **EP 1 321 870 A1**
(43) Date of publication of application: **25.06.2003**
(21) Application number: 01129858.5
(22) Date of filing: 14.12.2001
(51) Int. Cl.: G06F 17/60

(54) **Integrated order pre-matching system**

(71) Applicant: DEUTSCHE BÖRSE AG, 60485 Frankfurt am Main (DE)
(72) Inventor: Gomber, Peter, Dr., 60485 Frankfurt am Main (DE); Maurer, Kai-Oliver, Dr., 60485 Frankfurt am Main (DE); Zickwolff, Marcus, 60485 Frankfurt am Main (DE)
(74) Representative: Grünecker, Kinkeldey, Stockmair & Schwanhäusser Anwaltssozietät

(57) **Abstract**

The invention provides a method of operating a computer system for processing orders in a security trading system providing a reference market, and a corresponding computer system. A message that indicates a (private) quote is received. The quote includes quote parameters defining a buy limit order and a sell limit order. The quote parameters are stored. Then, an order is received and it is determined whether the order matches the quote. If so, the order is executed against the quote, otherwise order data is automatically generated and forwarded to the reference market for execution. The invention therefore provides an integrated internalization functionality in a security trading system leading to best execution of orders, to price-time priority consistency, order book consistency, full transparency and fairness.

## Description

The present invention relates to a method and system for processing orders in a security trading system providing a reference market, and in particular to order processing techniques in which orders are matched with quotes for execution purposes.

### BACKGROUND OF THE INVENTION

Besides exchange floor-trading, electronic trading systems have become important places where securities are bought and sold. A known trading platform for processing electronic orders is Xetra (Exchange Electronic Trading) which is a distributed system whose components are connected according to the client-server principle. Some of the Xetra functionality is decentralized on the participants' installations, so called front ends, and some of it is implemented centrally on the Xetra back end of the exchange. The participants' front end installation can also be set up based on the client-server principle, and the use of a programmable interface makes the front end an open system to which any number of different participants' applications can be connected or added on.

With Xetra, all market participants have equal access to the trading platform, regardless of their geographic location. Unlike exchange floor-trading, electronic order processing makes it possible for orders to be entered in the system and automatically matched. Further, trading in equities and warrants is possible on a single trading platform. It is further possible to individualise transaction requests with regard to validity and way of execution. Selection between limit and market orders takes into consideration the different demands of the market participants as to the speed of order execution.

In general, two fundamentally different concepts presently form the basis of securities trading world wide no matter whether the trading takes place on a regulated exchange or other market places: order book trading and market maker markets.

In order book trading, orders placed by investors in a given stock form an order book according to well defined principles, usually to price-time priority, i.e. according to the limit of the order and the time the order has been entered into the trading system. The order with the highest priority will be the first to be executed if an execution becomes possible. Executions are possible if the limit of the order with the highest priority on the buy-side of the order book is higher than or equal to the order limit with the highest priority on the sell-side of the order book. The execution or matching of orders also follows well defined principles where the prevailing trading form also influences the exact procedure, such as continuous trading and auction trading.

In market maker markets, several market participants constantly provide buy and sell offers in a given stock where these offers are open for acceptance by investors. The ways of acceptance as well as the degree of the binding character of the market makers' offers again follow well defined rules.

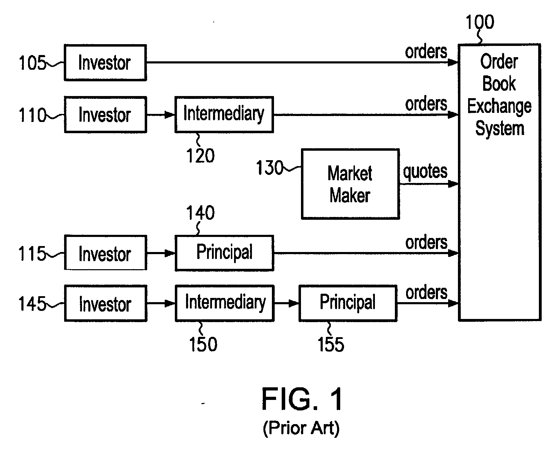

Besides these trading concepts in their pure form, hybrid market models are known which consist of some kind of combinations of these concepts. An example of a conventional hybrid market model is depicted in FIG. 1.

In this system, investors 105 exist that have direct access to trading. Such investors are usually banks or larger institutions. Further, investors 110 may exist that depend on an intermediary (broker) 120 in order to place orders or to accept offers made by a market maker 130. Such investors are usually small institutions or retail investor's.

In some markets, especially in the United States and the United Kingdom, intermediaries do not necessarily forward their investors' orders (agent orders) to the market place but withhold them in order to execute these orders themselves as a principal 140. This is called internalization of order flow. Further, principals 155 may exist which receive orders from an intermediary 150. In order to internalize, the principal 140, 155 operates a platform independent from platform 100. Internalization takes place for various reasons, the simplest being that the broker wants to save the market places' execution or transaction fees.

Either the principal 140 executes the internalized flow (broker-dealer) as a market maker, or it is a different entity (dealer). In the latter case the broker preferences his order flow with respect to a specific dealer because he usually has some kind of compensation-arrangement for providing the flow, e.g. payment for order flow. In the United Kingdom the dealer equivalent is the Retail Service Provider.

Referring now back to FIG. 1, the conventional trading systems are disadvantageous for a number of reasons.

As according to the prior art, the exchange trading software i.e. central limit order book 100, and the presently existing internalization platforms 140 form a disjunctive system, investors 105, 110, 115 or brokers 120, 140 have actively to choose or to address the execution venue. Once the order has been placed at the internalization platform 140 it has to be actively pulled back from the platform and sent to the central limit order book 100 if internalization is not possible. In this process, different interfaces apply.

Further, internalization of orders cannot rely on the reference market in certain market situations such as auctions because binding reference prices (bids and offers) are not available. As a consequence, best execution of the orders cannot be guaranteed.

In other words, the system time of the reference market 100 and the system time of the internalization market 140 can be different. This leads to some difficulties regarding best execution. Best execution is usually defined in relation to other execution venues, in this case the defined reference market. This means that the time stamp of the order execution in the internalization facility 140 and the time stamp of the reference market's 100 price will usually be different. Due to usually different time stamps it is then not clear whether the difference is due to different system times or due to delays in order execution.

In present internalization systems which execute an order at a best price, an order is entered into the trading system. Subsequently, the last buy and sell offers of the associated exchange are checked, the best price is determined and the trade is reported to the exchange trading system. Examples of such and similar systems are known.

WO 01/57752 A1 discloses a trading system that provides the market maker with a function for automatic hedging. The function is used by the market maker to hedge in another market and then trade a customer order when the other market has a better price. The market maker has the possibility to send price quotes to the order book. A quote is preferably a bid or ask quote with an attached volume. It has the same functionality as ordinary limit orders. The market maker may use a price improvement quote which automatically creates a quote when necessary. Thus, the market maker can enter the following order types: market maker price quotes, and market maker price improvement quotes. An incoming order tries to match with orders/quotes in the order book. If a match cannot be done the order is rejected or stored in the order book. An incoming order matches with orders/quotes in the order book as long as the incoming order locks/crosses with orders/quotes in the order book or the designated exchange best price. In case the incoming order has a better price (price cross) than orders/quotes in the order book, the price of the order/quotes in the order book is preferably used.

WO 00/57307 A1 discloses an auction market with price improvement mechanism. A system for auctioning financial products over a distributed, networked computer system is described that includes a plurality of workstations for entering orders for financial products into the computer system. The order specifies a price for the financial product, a quantity of the financial product and an exposure time which the order can remain active. The auctioning process is done by entering an order for a product where the order specifies a price, a quantity and an exposure time. A response to the order is entered, and the order is matched with the response in accordance with the exposure time specified by the order.

WO 00/28450 A2 discloses an automated exchange system in which an automated exchange is connected to other exchanges. The best selling order is checked in the order book. Then, the corresponding price in other exchange's order books is automatically checked, and the order is automatically transferred to the exchange having the better price, for being executed.

The check for a best price and the transfer to the exchange takes time. The internalization system sends an enquiry to the exchange system, this returns the requested information, the internalization system analyses the information and transfers the order to the associated exchange. During this time the order book situation, i.e. the situation concerning orders, can change at the exchange trading system. Orders which were input in the meantime by a third party, are first executed in order to meet the price-time priority constraint. Possibly, the "best price" is worse after this execution of an order by a third party, i.e. when being transferred by the internalization system, than it would be if this order without determination of the best price had been passed on directly into the exchange system. However, in this case it would not have been guaranteed that this exchange system offers also the best price.

Another disadvantage of the conventional trading techniques results from the fact that, as outlined above, price-time priority defines the sequence of order execution, i.e. in what sequence executable orders are executed against an incoming order. Presently, a price-time priority can be guaranteed within each of the platforms, i.e. the reference market 100 and the internalization market 140, but not across both platforms. An effect of this shortcoming is that orders in the reference market may not be executed although they have a higher price-time priority than the orders of the internalization platform with adverse effects for overall market transparency, liquidity and quality.

If orders are not executed on the internalization platform but are redirected to the alternative execution venue of the reference market there will be a further disadvantage. These orders will get a new price-time priority because they enter a new system and are therefore put at a disadvantage for those orders that were directly entered into the reference market. This leads to price-time priority inconsistencies.

Moreover, another disadvantage of the present systems is that modifications of the central order book, and thus also the price which can be obtained there, are made available to the customers in the numerous world wide systems with time delay only. Thus, situations might arise which lack full transparency and fairness.

### SUMMARY OF THE INVENTION

Given these problems with the prior art techniques, it is the object of the invention to provide a method of operating a computer system for processing orders in a security trading system such as an automated exchange, a corresponding computer program and a computer system, that provide such internalization functionality without the need to re-submit an order that could not be internalized, to the order book.

This object is solved by the invention as claimed in the independent claims.

The invention combines both order book and market making components in one trading model and trading software. Thus, the invention provides the integration of exchange trading and internalization function into a single system that can be embodied as a single program on the basis of a client-server architecture. The internalization functionality is preferably provided as an integral part of the exchange trading software that allows its member to get a preferential access to agent order flow in specific equities.

This functionality advantageously ensures interaction also with specific order flow. The internalization functionality also guarantees best execution in this sense that internalized orders will be executed better than the current order book. At the same time it ensures consistent price-time priority with respect to the order book.

Moreover, the internalized transaction is advantageously made outside the order book. A specific pre-matching functionality is provided, preferably to each member that is registered as an internalizer in a given equity. The internalizer provides one or several private quotes to this pre-matching functionality. The pre-matching algorithm also has access to the current inside market (best bid/ask, quantities at best bid/ask) in all the instruments where the member is registered as market maker.

A further advantage of the invention is that with the existence of a central and neutral reference market, namely the central order book of the electronic trading system, the invention provides highest quality of price determination for all investors. Price-time priority over all execution venues is ensured with high order book efficiency. The invention enables the internal matching of authorized order flow acquired from the proprietor's customers as well as the attraction of order flow for internal matching with third party intermediaries (preferencing). This capability of providing a preferencing service is in particular advantageous when orders are placed in network systems.

By integrating the so far disjunctive exchange trading software and the internalization platform in one platform, orders have a single point of entry serving both execution venues. Thus, according to the invention a single interface is advantageously used for addressing both execution venues. If the order is placed in the internalization facility it will automatically be transferred to the order book without any further manipulation if necessary. All orders are therefore executed in one trading system and all executions will preferably be published in real-time from one central source. Moreover, by automatically transferring respective orders into the order book, the invention overcomes the problem of the prior art that internalization of orders would not rely on the reference market in certain market situations because binding reference prices were not available. The invention may therefore offer an execution at the best price.

By integrating the internalization function in the exchange platform, the invention leads to the additional advantage that at any time and in any circumstances, order book consistency is achieved. By routing orders that cannot be executed against the private quote to the order book it is secured that customer orders are always immediately processed. This guarantees price-time priority as well as order book consistency.

Preferred embodiments of the invention are defined in the dependent claims.

By generating a time stamp and associating the order with this time stamp, the impact of potential market movements during best price determination is eliminated. Thereby the proof of best execution is always possible.

Moreover, during the execution process each order can be identified by one unique unchangeable time stamp that controls price-time priority in the exchange trading software. The time stamp therefore applies to both execution venues, the central order book and the internalization facility. Trades without participation of orders in the order book only take place if price-time priority is given. This advantageously avoids that orders keep sitting in the book while trades away from the book take place at prices that would lead to the execution of those orders. Thus, price-time priority consistency is achieved. This in turn ensures transparency, liquidity and quality of the overall market. In addition it is also ensured that orders that are sent to the internalization facility but are not executed there and are therefore forwarded into the central limit order book, are assigned the correct price-time priority, preferably the time of arrival in the system.

In a preferred embodiment, the invention advantageously makes use of a volume weighted average (VWA) value. This concept makes sure that the customer is serviced at any time with an execution price better than the execution price that were possible when executing the respective order in the conventional order book. Further, the use of a volume weighted average (VWA) value is advantageous since it protects the registered internalizer from being exploited by retail customers who narrow the spread by placing orders of very small size and then place significantly larger orders to the order book directly.

The use of the VWA-principle could entail that there are orders in the order book with a limit better than or equal to the potential execution price in the internalization facility. In order to ensure price priority between the internalization facility and the order book the concept of order book consistency is introduced.

Moreover, order book consistency can be achieved in that orders with a limit better than or equal to the execution price when executing the order against the private quote, are executed in advance. This is secured by the automatic generation of orders of the market maker that execute these orders with the better or equal limit in the central order book. By means of this feature, the invention advantageously allows for generating an automatic order of the market maker to keep the order book consistent.

When the order is automatically routed into the central order book if an execution against the private quote is not immediately possible, this is advantageous because it is secured that customer orders are always immediately processed no matter if the service of the market maker is available. Thus, price-time priority and order book consistency are advantageously guaranteed.

When orders that are executed against the private quote are executed without partial executions, this is a strong benefit for the customer since potential additional bank fees cease to apply.

When modifications of the central order book are made available to all customers in all systems immediately, full transparency and fairness is achieved. Moreover, by reporting prices of internalized trades and trades of the central order book real-time, all prices are made real-time and in the correct sequence to all participants via a world wide network.

By automatically routing customer orders that cannot be internally matched with price improvement into the central order book, best execution is guaranteed and the combined system serves as a fair market provider for all market participants. It is therefore assured that the usual conflict of interest by market maker driven platforms is avoided. This conflict in conventional systems is that the market maker on the one hand is obliged to guarantee to the investor a certain execution quality. On the other hand, the market maker could make profit by withholding customer orders until the market develops as desired.

By specifying ex-ante quote parameters, the market maker expresses his willingness to provide best execution. These quote parameters are entered into the system before an order to be executed against the private quote arrives. There is preferably no possibility to have a "look" at the order and then - with a time delay - to decide whether the order is executed against the private quote, or not. This plausibility check avoids conflicts of interest among market makers during execution of internalized order flow. Furthermore, it guarantees fairness among market participants and satisfies the regulatory requirements of an exchange trading system.

### DESCRIPTION OF THE DRAWINGS

In the accompanying drawings, preferred embodiments of the invention are described in more detail. The drawings are not to be construed as limiting the invention to only the illustrated and described examples of how the invention can be made and used. Further features and advantages will become apparent from the following and more particular description of the invention, as illustrated in the accompanying drawings, wherein:
- FIG. 1: illustrates conventional hybrid market models;
- FIG. 2: illustrates a system according to a preferred embodiment of the invention;
- FIG.3: is a flowchart illustrating the main trading process according to a preferred embodiment of the invention;
- FIG. 4: is a flowchart illustrating the process of specifying a private quote according to a preferred embodiment of the invention;
- FIG. 5: is a flowchart illustrating a first preferred embodiment of the order processing scheme according to the invention;
- FIG. 6: is a flowchart illustrating a second preferred embodiment of the order processing scheme according to the invention;
- FIG. 7: is a flowchart illustrating the process of in-advance order book execution according to a preferred embodiment of the invention; and
- FIG. 8: illustrates an example of the interaction of trading phases and the system of the invention.

### DETAILED DESCRIPTION OF THE INVENTION

The illustrative embodiments of the present invention will be described with reference to the figure drawings wherein like elements and structures are indicated by like reference numbers.

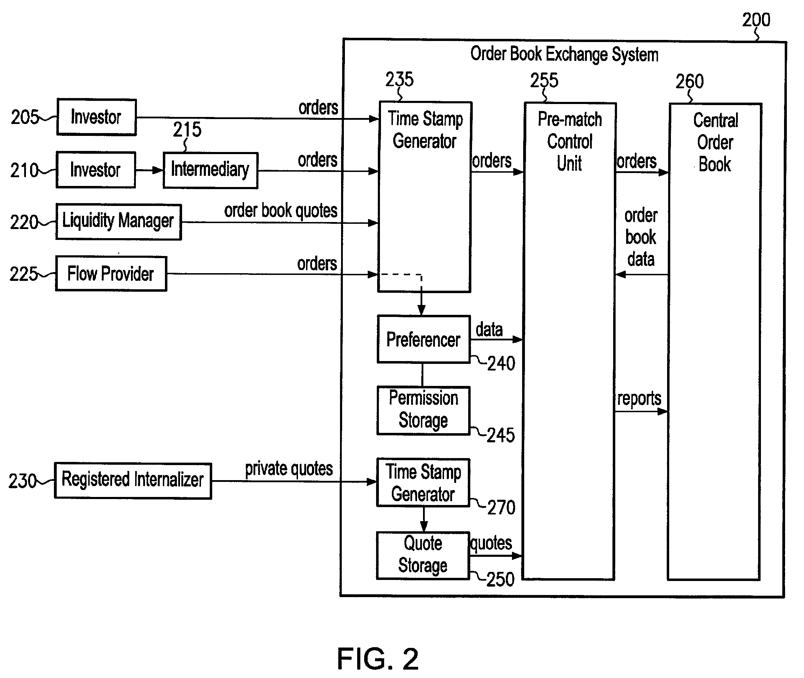

Referring now to the drawings and particularly to FIG. 2, the system according to the preferred embodiment of the invention consists of an order book exchange system 200 to which a number of market participants have access. These market participants are investors 205 that place orders directly to the order book exchange system 200, or investors 210 that place orders by means of an intermediary 215. These exchange members send their internalizable customer orders to the order book exchange system 200 through the broker-internal order routing system (own order flow) or through a preferencing and routing functionality (third party order flow).

Another exchange member that is permitted to trade on the exchange, is the registered internalizer 230. Only those exchange members can be registered internalizers that are classified according to this trader type. Only registered internalizers 230 are allowed to enter and delete (private) quotes. That is, the order book exchange system 200 allows registered internalizers 230 in a given equity to offer special services to their own customers or customers of other exchange members by providing a pre-matching facility for that equity. The pre-matching functionality ensures interaction with specific order flow and provides a reliable preferential access to own or preferenced order flow for the registered internalizer 230.

Besides the so far discussed exchange members, there are other traders that are permitted to trade on the exchange, namely liquidity managers 220 and flow providers 225. These members and their functionality will be discussed in more detail below.

Turning now to the order book exchange system 200 depicted in FIG. 2, the incoming orders first enter a time stamp generator 235 to determine and define the time of arrival of the orders. The orders are then sent to the pre-match control unit 255 that investigates the incoming orders and performs a pre-matching function in relation to private quotes, to establish internalization. The private quotes are retrieved from quote storage 250 of the order book exchange system 200 where private quotes received from the registered internalizer 230 are stored. As shown in FIG. 2, private quotes are preferably time stamped by time stamp generator 270 when they are received. The time stamp generator 270 may be different or of the same construction as the time stamp generator 235, and both time stamp generators 235, 270 may even be formed integrally as one unit.

When internalizing, the pre-match control unit 255 might place orders to the central order book 260 for execution, or executes orders itself. In the latter case, the pre-match control unit 255 might send reports to the central order book 260 to report on the execution of orders. For deciding whether or not incoming orders are executed internally, the pre-match control unit 255 can obtain order book data from the central order book 260 to determine the current order book situation. Thus, the central order book 260 forms the reference market in the present embodiment. However, in another preferred embodiment of the invention, the reference market could be any other entity that provides reference prices, instead of the central order book 260.

In the system depicted in FIG. 2, the exchange members and the order book exchange system 200 preferably form a distributed network of computer systems operating in a client server architecture. The exchange members send messages to the order book exchange system 200 to specify quotes and place orders, and these messages are preferably in the form of electronic data sent through the network.

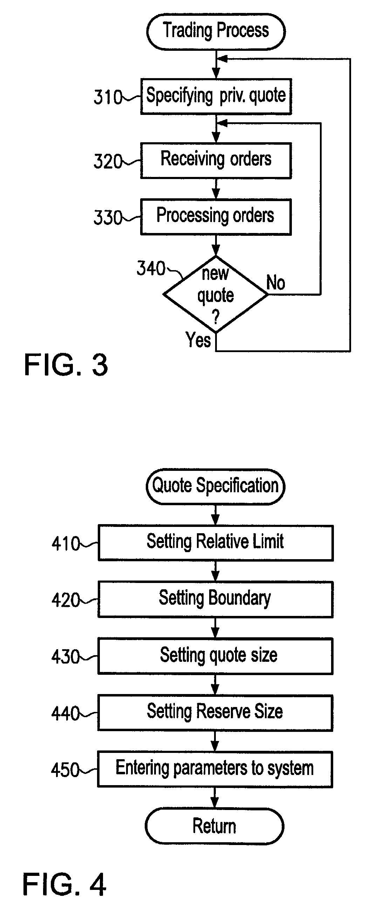

As apparent from the foregoing, the order book exchange system 200 according to the invention is a trading system in which the internalization functionality forms an integral part allowing the members to get preferential access to agent order flow in specific equities. The trading process according to a preferred embodiment of the invention will now be described in more detail with reference to the flowcharts depicted in FIGs. 3 to 7.

FIG. 3 illustrates the main process of placing private quotes and orders and executing the orders. First the registered internalizer 230 places a private quote in step 310. A private quote is a set of parameters for the sell side and/or for the buy side. Dependent on the technical implementation, the parameters may be converted by the pre-match control unit 255 into a counter order upon receipt of a customer order. Private quotes are preferably not shown in the central order book 260. The private quote is stored in the quote storage 250 and is held accessible to the pre-match control unit 255. Private quotes entered to this system are preferably good-for-day, but other validity constraints can also apply such as good-till-date or good-till-cancelled. Preferably, only one private quote per security can be placed per registered internalizer 230. Securities, or traded instruments, for which private quotes can be placed include equities, bonds, warrants (based on indices, currencies, interest products, equities and other underlying, as well as exotic warrants, certificates, and reverse convertibles) and basis instruments, and derivatives.

After a private quote is specified in step 310 and stored to the quote storage 250, the exchange members will place orders in step 320. The orders are then processed in step 330.

Orders generally include limit orders, market orders, iceberg orders, market-to-limit orders, stop market orders, stop limit orders and accept surplus orders, but internalization can be restricted to some of these order types. A limit order is an order which has a limit associated. An order cannot be executed at a price worse than the limit. A market order is an order which has no limit associated. A market-to-limit order is an order which has no limit associated at the time of the entry. After partial execution, the remaining quantity is entered with a limit equal to the price of the partial execution. An iceberg order is a hidden order with a volume that is only partially visible in the order book.

As mentioned above, private quotes are preferably good-for-day. Therefore, a number of orders will be placed and are then processed without the need for the registered internalizer 230 to input new private quotes. Thus, in the trading process depicted in FIG. 3 it is determined in step 340 whether the registered internalizer 230 has submitted a new private quote. If no new private quote is submitted, the process returns to step 320 to receive orders from other exchange members. If it is determined in step 340 that a new private quote is provided by the registered internalizer 230, the process returns to step 310 for storing the newly submitted private quote in the quote storage 250. As will be appreciated, even if no new private quote is provided by the registered internalizer 230, the private quote might nevertheless be modified in the course of processing orders. This will be described in more detail below.

As apparent from the main trading process depicted in FIG. 3, private quotes are specified ex-ante, that is before any orders are placed that will be executed against the private quote.

Turning now to FIG. 4, the step 310 of specifying a private quote is illustrated in more detail. A private quote is specified by setting a number of quote parameters. In the present embodiment these parameters are the Relative Limit, the Boundary, the maximum order size, and the Reserve Size. The quote parameters are preferably specified for each private quote on its bid side (bid leg) and ask side (ask leg) separately.

The relative limit parameter which is set in step 410 allows to have a varying private quote which depends on the current best bid or best ask or on the volume weighted average price (see below) for the size of the incoming order in the central order book 260. This relative limit, e.g. of +/- 0.01 Euro, always refers to the actual situation in the central order book 260 and minimises the communication load between the members' front end and the back end. The relative limit for the bid leg of the private quote is positive (e.g. + 0.01 Euro) and the relative limit for the ask leg of the private quote is negative (e.g.- 0.01 Euro).

In step 420, the Boundary parameter is set. In order to protect the registered internalizer 230 from adverse price movements due to modifications in the current order book, this parameter is set to specify a boundary as an upper limit for the bid leg of the private quote, or a lower limit for the ask leg of the private quote. When determining whether or not to execute an order against a private quote, the pre-match control unit 255 checks if the potential execution price exceeds the upper boundary for the bid leg in case of an incoming sell order, or if it falls below the lower boundary for the ask leg in case of an incoming buy order. In one of these cases, the order is not executed against the private quote and is routed into the central order book 260.

Another quote parameter that is set (step 430) is the quote size which is the size (e.g. in shares) assigned to the private quote by the registered internalizer 230 which is the maximum size for every order which is subject to execution against the private quote based on the relative limit.

Internalization will preferably be restricted to retail orders up to a predefined maximum order size. Therefore, a maximum order size (defined e.g. as a Euro value) is introduced. All orders that are larger than this maximum order size (irrespective of the content of the execution ID which will be described below) are not subject to execution within the pre-match control unit 255 and are immediately routed into the central order book 260. The management of the exchange defines this maximum order size.

Finally, in step 440 a fourth quote parameter is set, the Reserve Size. In order to be able to specify a private quote once for a whole set of pre-match executions, registered internalizers 230 can provide this quote parameter. When an own agency order or a preferenced order is executed against the reserve size of the private quote, the reserve size is reduced by the executed size until the reserve size is below the quote size. Preferably, incoming orders are always executed against the quote size only and do not immediately match the reserve size and though might be forwarded into the order book. If the reserve size is smaller than the quote size, execution against this side or leg of the private quote is preferably not possible anymore for this registered internalizer 230 for this instrument or security until a new reserve size is entered.

Once the quote parameters are set in steps 410 to 440, the process continues in step 450 with entering the parameters to the system, i.e. storing the private quote in the quote storage 250.

It will be appreciated by those of ordinary skill in the art that other schemes than that depicted in FIG. 4 are also applicable within the invention. For instance, the sequence of steps depicted in the flowchart can vary. Moreover, it might not be necessary in each individual case to specify the total set of four quote parameters in the private quote. Thus, it is within the invention to use only three, two or just only one quote parameter, or to add further quote parameters that are not described herein.

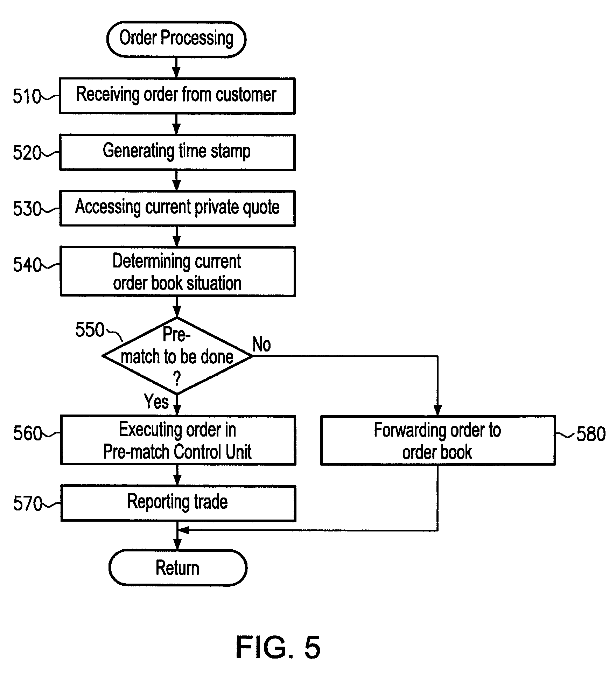

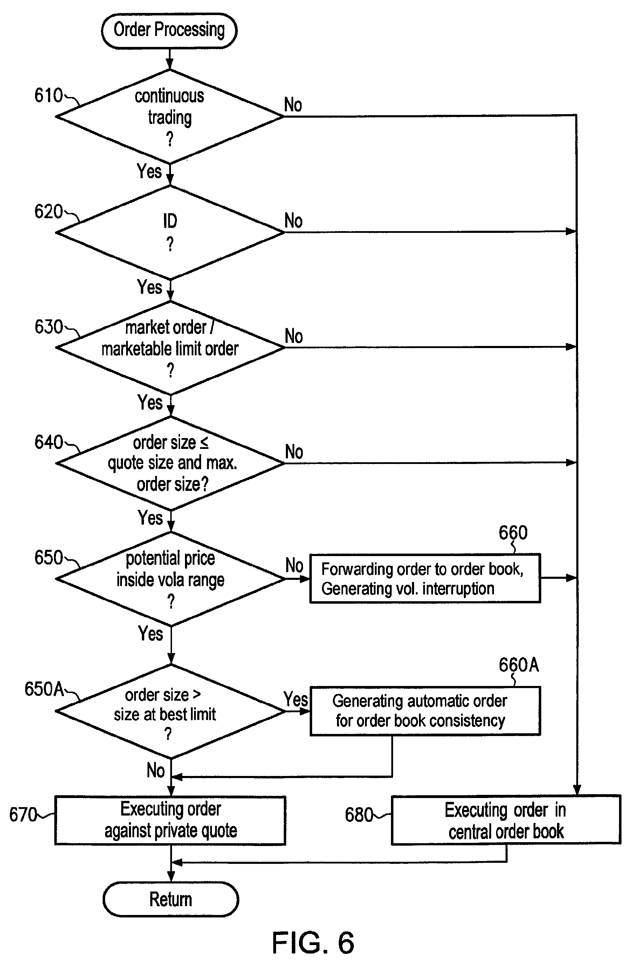

As discussed earlier when describing the flowchart of FIG. 3, once a private quote is specified, orders from the exchange members are received that are then to be processed in the order book exchange system 200. Preferred embodiments of the order processing technique of the invention are depicted in FIGs. 5 and 6.

Turning first to the flowchart of FIG. 5, an order from the customer (i.e. the investor) that had been placed in step 320 is received in step 510. The received order is first forwarded to the time stamp generator 235 in step 520 to generate a time stamp. The time stamp is a data item indicating the valid time of the respective order. Preferably, this time is the time of receipt of the order in the time stamp generator 235.

After generation of the time stamp data item, this data is associated with the respective order. If the order is in the form of electronic data, the time stamp data item is preferably attached to the order data, for instance in a header of the order data. Alternatively, the time stamp data item is stored in a volatile or non-volatile memory within the order book exchange system 200 together with an identification item identifying the respective order.

After the time stamp has been generated and associated to the order in step 520, the order processing scheme continues in step 530 by accessing the current private quote. Thus, in step 530 the orders are forwarded from the time stamp generator 235 to the pre-match control unit 255, and the private quote is retrieved from the quote storage 250.

In the next step 540, the current order book situation is determined. For this purpose, the pre-match control unit 255 receives from the central order book 260 order book data indicating the current order book situation. Preferably, this is done by previously sending a request from the pre-match control unit 255 to the central order book 260, whereupon the central order book 260 sends back the respective data in response to the request. Alternatively, the central order book 260 is arranged for continuously sending order book data to the pre-match control unit 255 and updating this data whenever the order book situation changes, in order to reduce communication load. In this case, there is no need for the pre-match control unit 255 to send a request to the central order book 260 in step 540 since all the data is already present.

After the pre-match control unit 255 has received the order with the associated time stamp as well as the private quote and the order book data necessary to determine the current order book situation, the pre-match control unit 255 proceeds in step 550 with checking whether a pre-match is to be done. This is actually the check whether the incoming order can be executed against the private quote, based on the internalization functionality of the order book exchange system 200. Preferred embodiments of how the check in step 550 can be based on suitable criteria are described in more detail below.

If it is determined in step 550 that a pre-match is to be done, the pre-matching algorithm is applied in step 560 for executing the order against the private quote in the pre-match control unit 255. The trade is then preferably marked for reporting and publication purposes (step 570).

If it is determined in step 550 that no pre-match is to be done, the order is forwarded from the pre-match control unit 255 to the central order book 260 for execution. This is depicted in FIG. 5 by step 580.

Again, it is apparent to those of ordinary skill in the art that the sequence of steps shown in FIG. 5 has been chosen for illustration purposes only and is not to be understood as limiting the invention. For instance, the step 540 of determining the current order book situation might be skipped in some cases where it is clear from a comparison of the order and the private quote that an execution of the order against the private quote is impossible regardless of the current order book situation. In this case, the step 550 of determining whether a pre-match is to be done could be split into a first check that is to be done between steps 530 and 540 and a second step that is to be performed after the current order book situation is determined. In another alternative embodiment, the step 540 of determining the order book situation could be performed directly before steps 560 and 580, respectively.

Moreover, while the process depicted in FIG. 5 is a first preferred embodiment of the order processing technique according to the invention, a second preferred embodiment thereof will now be described with reference to FIG. 6.

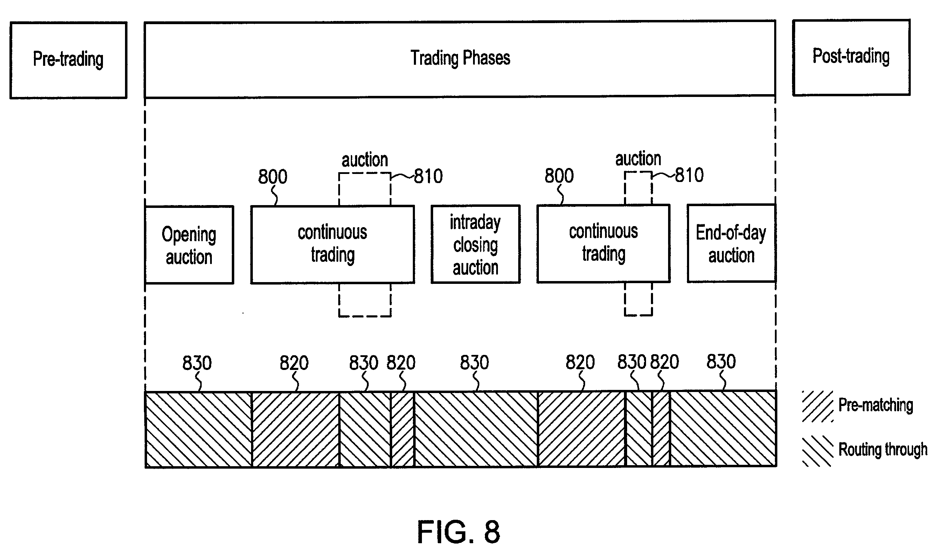

As apparent from this figure, it is first checked in step 610 whether the order book exchange system 200 is presently operating in a continuous trading phase. The different kinds of trading phases will be described below in more detail with reference to FIG. 8.

In step 620, the pre-match control unit 255 checks whether an execution ID is set and which registered internalizer 230 is identified by this execution ID. By means of the execution ID, the order book exchange system 200 can supply a functionality that allows order flow providers 225 to direct their flow to a registered internalizer 230 in order to provide best execution to the flow provider's customers. The interrelation between flow providers 225 and registered internalizers 230 is defined on order level, i.e., the flow provider 225 may have contractual agreements with registered internalizers 230 and addresses the private quotes on the basis of the execution ID submitted for each order.

Preferably, the execution ID is stored in a field of the incoming order data, e.g. in the header of an incoming order message. The execution ID contains the identification of the registered internalizer 230. Thus, customers of the flow providers 225 are allowed to have their orders executed against the private quote of the registered internalizer 230. This is a preferencing technique enabling the order book exchange system 200 to execute customer orders that are received through the broker-internal order routing system (own order flow) or by a flow provider 225 (third party order flow).

The registered internalizer 230 has previously informed the order book exchange system 200 on the set of flow providers 225 that are allowed to execute their customers' orders against the private quote of the respective registered internalizer 230. For this purpose, the order book exchange system 200 includes a permission storage 245 storing data indicating which flow provider 225 is allowed to have orders executed against the private quotes of which registered internalizer 230. Further, the order book exchange system 200 includes a preferencer 240 for performing the respective permission check. The preferencer 240 receives the orders from the time stamp generator 235 and sends specific data to the pre-match control unit 255, informing the pre-match control unit 255 on whether permission is given or not.

After the execution ID is checked in step 620, another check is performed in step 630 for determining whether the incoming order is a market order or a marketable limit order. In this embodiment, the internalization function that allows for pre-matching the orders to execute the orders against the private quote is restricted to only some of the possible order types. Orders may exist for which the order book exchange system 200 is not arranged to perform internalization. Thus, the order book exchange system 200 may include a type storage (not shown) storing data indicating which order types are generally subject to execution against private quotes. The determination of the order type is preferably done by checking an order type field in the received order data.

The order processing scheme depicted in FIG. 6 further includes a checking step 640 in which the order size of the incoming order is investigated. Preferred, more detailed embodiments of how this check is done will be described below. In step 640, the order size is compared with the quote size indicated in the private quote and with the maximum order size (e.g. in Euro). This is because an order of a size greater than indicated by the private quote or greater than the maximum order size cannot be executed against a private quote.

Another check is performed in step 650 for determining whether the potential execution price when executing the order against the private quote lies inside a volatility range. If this is not the case the order will be forwarded into the order book and a volatility interruption is triggered in step 660. Otherwise, an order book consistency check takes place in step 650A based on the size of the incoming order relative to the size at the best limit in order to identify orders with a better limit in the order book and to ensure in-advance execution of these orders in step 660A.

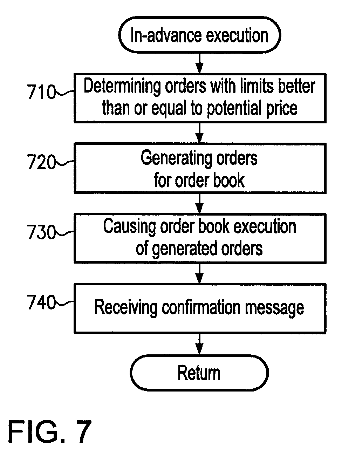

This process is shown in more detail in FIG. 7. It is first determined in step 710 whether orders exists that have better limits than the potential price, or at least the same. For these orders, order data is generated for the order book in step 720, and the order book is caused in step 730 to execute the generated order data. Then, a confirmation message is sent from the central order book 260 to the pre-match control unit 255 in step 740 indicating that orders according to the generated data have been executed in the order book.

Preferred embodiments of the check whether the potential price lies inside the volatility range, as well as examples of the partial or complete in-advance order book execution will be discussed in more detail below.

Turning now back to FIG. 6, if any one of the checks 610 to 640 has negative result values, order execution will be done in the central order book 260 (step 680). Otherwise, the order can be executed against the private quote in step 670.

Apparently, the sequence of the steps shown in FIG. 6 is not mandatory. Further, while with respect to FIGs. 5 and 6 two preferred embodiments have been described of how orders can be processed, these embodiments can be mixed up. For instance, steps 520 and 570 of generating a time stamp and reporting the trade can also be performed in the process of FIG. 6. Likewise, some or each of the checks performed in the process of FIG. 6 could also be performed in the process of FIG. 5.

Referring now back to step 610 where it is determined whether the order book exchange system 200 currently operates in a continuous trading phase, order executions against private quotes are preferably possible during defined exchange trading hours between the end of the opening auction and the start of the closing auction or the end-of-day auction. This is shown in FIG. 8.

Between the pre-trading phase and the post-trading phase, there are a number of trading phases such as auctions and continuous trading phases 800. A continuous trading phase is a trading phase with ongoing price determination where each incoming order is instantly checked to determine whether it can be matched. During continuous trading, the order book is always open. Continuous trading phases 800 might be interrupted by auctions 810, or by volatility interruptions and market order interruptions of auctions. Preferably, the pre-matching capability of the order book exchange system 200 is disabled during all auctions. Thus, the trading day can be understood as a sequence of time periods 820 in which the internalization functionality is enabled, and time periods 830 where no pre-matching is performed and all orders are routed into the central order book 260, irrespective whether they are marketable or not and irrespective of the content of the execution ID.

Turning now back to FIG. 2, another exchange member that can place orders to the order book exchange system 200 is the liquidity manager 220. To assure liquidity in the central order book 260 and to guarantee a reference price for best execution, the order book exchange system 200 preferably defines a liquidity provision obligation for the registered internalizer 230. The order book exchange system 200, or the exchange, defines the equities that require provision of additional liquidity within the order book by the provision of quotes in the order book. The internalizer has to provide or ensure the provision of quotes in these equities in the central order book 260. These quotes are called "order book quotes". An order book quote is defined as a pair of buy and sell orders with a defined maximum spread and at least the minimum quote quantity.

Based on this obligation to provide liquidity management as a compensation for the use of the internalization functionality, an outsourcing option to a specialist is preferably also provided. In general, the registered internalizer 230 is obliged to provide liquidity management in all instruments he is internalizing. However, he preferably can outsource this requirement to a third party, i.e. the liquidity manager 220. Each member can take the liquidity manager role.

Any member acting as liquidity manager is obliged to maintain quotes in the order book with a minimum quote volume and with a maximum spread associated with that security throughout the trading day, i.e., during the quotation duration defined by the exchange. In the order book, these quotes are shown anonymously and aggregated with the orders at each price level. These quotes are available for automatic execution against other orders and quotes.

As described above, an order is derived from the private quote parameters and from the current order book situation. A private quote specifies the price improvement relevant to the current best bid/best ask in the order book if the order size if smaller than or equal to the size at best bid/best ask limits in the order book. If the order size exceeds the size at best bid/best ask limits in the order book, the private quote specifies the price improvement relative to the volume weighted average (VWA) in the order book. The VWA is defined as the average execution price for the specified order size of the order if the order would be executed in the order book.

For example. it is assumed that the order book has the following data entries:

| **Bid** | | **Ask** | |
|---|---|---|---|
| Volume | Limit | Limit | Volume |
| 60 | 54,35 | 54,39 | 170 |
| 180 | 54,32 | 54,41 | 50 |
| 140 | 54,31 | 54,46 | 320 |
| 540 | 54,30 | 54,49 | 920 |

If a buy order is entered with a size of 500, the VWA is equal to (170 54.39 + 50 · 54.41 + 280 · 54.46) / 500 = 54.4312.

As described above, the determination of whether the order matches the private quote, i.e., whether a pre-match is to be done and the order is to be executed against the private quote, is made dependent for example on the order size, the quote parameters, the volatility range and the current order book situation. This will be described given preferred examples.

Private quotes are derived from quote parameters and the current order book situation. The quote provider is the registered internalizer 230, and the private quotes are hidden and are not shown aggregated in the order book. Quote specification is relative to the current order book situation and not absolute. An example of a private quote would be:

| **Bid** | | | | **Ask** | | | |
|---|---|---|---|---|---|---|---|
| Reserve Size | Size | Boundary | Relative Limit | Relative Limit | Boundary | Size | Reserve Size |
| 20.000 | 600 | 59,00 | +0,02 | -0,01 | 52,00 | 600 | 20.000 |

As mentioned above, order execution might depend on the order size. Depending on the size of the incoming order in comparison to the size indicated by the private quote, three different situations can be distinguished according to the present embodiment:

| **Case** | **Execution** | **Price** |
|---|---|---|
| (Order Size ≤ Size at best bid/best ask) and (Order Size ≤ Size Private Quote) | Against Private Quote | At least 0.01 higher than best bid for sell orders in the order book and 0.01 lower than best ask for buy orders |
| Size at best bid/best ask < Order Size ≤ Size Private Quote | Against Private Quote; orders in the order book with limits better than or equal to the potential pre-match execution price are executed in advance | At least 0.01 higher than (rounded) order book VWA on the buy side for sell orders and 0.01 lower than (rounded) order book VWA on the sell side for buy orders |
| (Order Size > Size Private Quote) or (Order Size > maximum order size) | Exclusively order book | VWA of current order book |

This will now be described in the context of the following examples where it is assumed that the registered internalizer 230 has submitted the following quote parameters to specify his private quote:

| **Bid** | | | | **Ask** | | | |
|---|---|---|---|---|---|---|---|
| Reserve Size | Size | Boundary | Relative Limit | Relative Limit | Boundary | Size | Reserve Size |
| 20.000 | 600 | 59,00 | +0,02 | -0,01 | 52,00 | 600 | 20.000 |

In the first case shown in the table, it is assumed that a marketable retail buy order of size 50 is submitted. As apparent from the above order book example, the size at best bid/best ask is 170 and therefore greater than the order size. Further, the size indicated in the private quote is 600 and thus again greater than the order size. The order is therefore to be executed against the private quote, and the price is 54.38, i.e. the current best ask of 54.39 decreased by the relative limit 0.01. The reserve size is decreased by the order size to 19950. The order book remains unchanged.

The following table shows which executions take place:

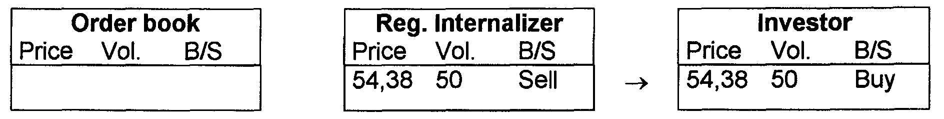

Considering now the second case, it is assumed that the order size is 500 and is therefore greater than the size at best bid/best ask which is 170 but lower than the size indicated in the private quote, i.e. 600. The order again is assumed to be a marketable retail buy order.

In this case, the order has again to be executed against the private quote, but the price is now 54.42, i.e. the current VWA decreased by the relative limit 0.01. As mentioned above, the VWA in this case is equal to 54.4312 and is rounded to 54.43.

As mentioned above when discussing steps 650 and 660 of FIG. 6, the invention preferably takes care, in order to achieve order book consistency, that orders with a limit better than or equal to the potential execution price have to be executed in advance. Therefore, before execution against the private quote takes place, the ask order with a size of 170 and a limit of 54.39 in the order book and the ask order with a size of 50 and a limit of 54.41 in the order book are executed in the order book. Afterwards, the retail order is executed as a whole, i.e. with its total size of 500, at 54.42 against the private quote. The private quote of the registered internalizer 230 is set back to 600. The reserve size is decreased by 500 to 19500.

The following table shows which executions take place:

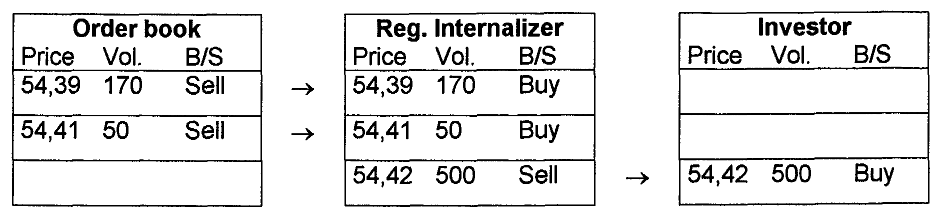

Referring now back to the above table showing the three cases of order execution dependent on the order size, in an example of the third case it is assumed that the incoming order is a marketable retail buy order of size 900. This order enters the order book and is executed against the order book. This may include the order book quote of the registered internalizer 230 or a liquidity manager 220.

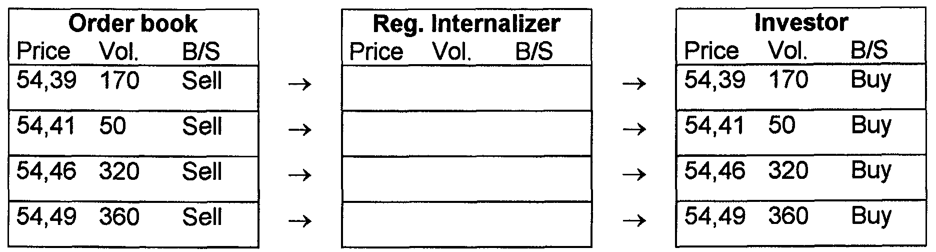

In the following, the handling of volatility interruptions during continuous trading phases will be described in more detail.

Safeguards against adverse price movements also apply to the pre-match control unit. To ensure price continuity, continuous trading might be interrupted by a volatility interruption whenever the potential execution price for executions against a private quote lies outside the dynamic and/or static price range around a reference price. Before the order is executed, it is therefore checked whether the potential price would trigger a volatility interruption.

Assuming that the registered internalizer 230 has submitted the following parameters to specify a private quote

| **Bid** | | | | **Ask** | | | |
|---|---|---|---|---|---|---|---|
| Reserve Size | Size | Boundary | Relative Limit | Relative Limit | Boundary | Size | Reserve Size |
| 20.000 | 1.000 | 59,00 | +0,02 | -0,01 | 52,00 | 1.000 | 20.000 |

and further assuming that the current order book includes the following items:

| **Bid** | | **Ask** | |
|---|---|---|---|
| Volume | Limit | Limit | Volume |
| 50 | 52,35 | 54,41 | 200 |
| 100 | 52,32 | 54,45 | 300 |
| 220 | 52,31 | 56,19 | 500 |
| 1230 | 52,30 | 57,00 | 3.000 |

and further assuming that the last execution price in the order book is 52.35, the trigger price for the volatility interruption based on the reference price of 52.35 may be assumed to be 54.29.

When for instance a marketable retail buy order of size 100 is submitted to the order book exchange system 200, the potential execution price is 54.40, i.e. the current best ask 54.41 reduced by the relative limit 0.01. As the potential execution price of 54.40 lies outside the predefined volatility range because the trigger price is lower, the order is routed to the order book and a volatility interruption is triggered as the next potential execution price within the order book of 54.41 lies outside the volatility range.

In another example, the order book has the following entries:

| **Bid** | | **Ask** | |
|---|---|---|---|
| Volume | Limit | Limit | Volume |
| 60 | 52,35 | 54,41 | 200 |
| 180 | 52,32 | 54,45 | 300 |
| 140 | 52,31 | 56,19 | 500 |
| 540 | 52,30 | 57,00 | 3.000 |

and a marketable retail buy order of size 1000 is submitted. In this example, the trigger price for the volatility interruption based on the reference price of 54.45 is assumed to be 55.19. The VWA of the order for a size of 1000 is 55.31. The potential execution price of the order is 55.30, i.e. the current VWA 53.31 reduced by the relative limit 0.01.

As the potential execution price of 55.30 lies outside the predefined volatility range, the order is routed into the order book and executed against the orders in the book:

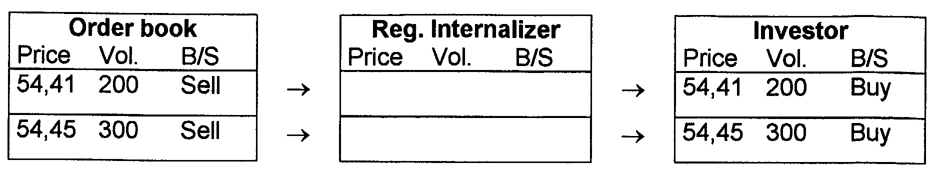

After the second execution, the volatility interruption is triggered since the next potential execution price within the order book of 56.19 lies outside the volatility range.

During volatility interruptions and extended volatility interruptions in continuous trading, all orders are preferably routed into the central order book 260 so that no execution against the private quote is possible.

Special order book constellations will now be described, including the execution of iceberg orders and the processing of cross/locked situations and situations where the order book is empty.

If iceberg orders are residing in the order book, the pre-match control unit 255 preferably takes iceberg orders into account for the determination of the execution price. For example, it is assumed that the registered internalizer 230 has submitted the following quote parameters to specify a private quote:

| **Bid** | | | | **Ask** | | | |
|---|---|---|---|---|---|---|---|
| Reserve Size | Size | Boundary | Relative Limit | Relative Limit | Boundary | Size | Reserve Size |
| 20.000 | 1.000 | 59,00 | +0,02 | -0,01 | 52,00 | 1.000 | 20.000 |

The current central order book 260 has the following items:

| **Bid** | | **Ask** | |
|---|---|---|---|
| Volume | Limit | Limit | Volume |
| 600 | 54,35 | 54,41 | 200 |
| 200 | 54,34 | 54,45 | 300 |
| | Iceberg | 54,41 | 5.000 |

If a marketable retail buy order of size 1000 is submitted to the order book exchange system 200, the VWA of the order book for a size of 1000 is 54.41, including the overall volume of the iceberg. The order is executed as a whole, i.e. with size 1000, against the private quote of the registered internalizer 230 at 54.40, i.e. the current VWA 54.41 reduced by the relative limit 0.01. The private quote of the registered internalizer 230 is set back to 1000. His reserve size is decreased by 1000 to 19000. The order book remains unchanged.

The following table shows which executions take place:

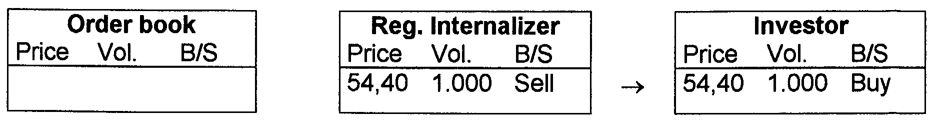

An example of an iceberg at deeper limits in the order book will now be described. The order book is assumed to have the following entries:

| **Bid** | | **Ask** | |
|---|---|---|---|
| Volume | Limit | Limit | Volume |
| 600 | 54,35 | 54,41 | 200 |
| 200 | 54,34 | 54,45 | 300 |
| 200 | 54,34 | 54,46 | 1.500 |
| | Iceberg | 54,45 | 5.000 |

and a marketable retail buy order of size 1000 is submitted to the system. The VWA of the order book for a size of 1000 is 54.442 including the overall volume of the iceberg. The order has to be executed against the private quote of the registered internalizer 230 at 54.43, i.e. the current (rounded) VWA 54.44 reduced by the relative limit 0.01.

In order to achieve order book consistency, it is preferred that orders with a limit better than or equal to the potential execution price against the private quote have to be executed in advance. Therefore, before the execution against the private quote takes place the ask order with a size of 200 and a limit of 54.41 is executed in the order book. For this purpose, order data which executes the orders in the order book is automatically generated by the system on behalf of the registered internalizer 230. Afterwards, the incoming retail order is executed as a whole, i.e. with size 1000, at 54.43 against the private quote. The private quote of the registered internalizer 230 is set back to 1000. His reserve size is decreased by 1000 to 19000.

The following table shows the transactions:

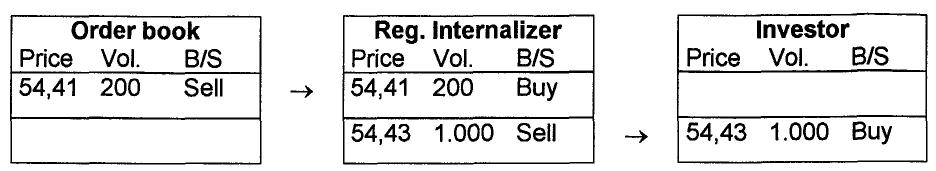

If due to a tight spread in the order book, the relative limit of the private quote equals or exceeds the best limit on the other side of the order book, the relative limit is temporarily not valid since quotes do not execute orders residing in the order book. In these crossed/locked situations, the incoming orders are routed into the order book until the relative limit is within the spread again.

In case of an empty order book, if there are market orders or no orders on the other side of the order book, i.e. there is no liquidity manager's quote, executions against the private quote are not possible and the orders are routed into the central order book 260.

As apparent from the foregoing, the invention provides a pre-matching algorithm which takes the current private quote for the respective internalizer. As described above, as long as a private quote is present in the quote storage 250 and the remaining criteria are met, the private quote provides an improvement with respect to the current order book situation due to the provision of relative limits. Then, the pre-matching algorithm will match the order with the private quote without deleting the private quote itself. The trade will be handled like all other transactions for reporting and publication purposes. Otherwise, the customer order will automatically be forwarded to the order book. There is preferably no private limit order book for the different internalizers: all non-marketable orders are then also forwarded to the central order book.

Further, the order flow may be own order flow or may be purchased from other order flow providers. Therefore, a functionality is preferably also supplied that allows members to direct their order flow to specific market makers (preferencing).

Preferably, no transaction price when executing the order against the private quote is feasible which is lower than or equal to the current best bid or higher than or equal to the current best ask in the order book unless all orders in the order book with limits better than or equal to the potential execution price against the private quote are executed in advance. If the order size exceeds the size at best bid/best ask limits in the order book, the private quote specifies the price improvement relative to the volume weighted average in the order book.

Preferably, if an execution against the private quote is not immediately possible, based on criteria for best execution, the customers order is automatically routed into the central order book. Further, without price improvement the customer order is automatically routed into the central order book, to achieve best execution. That is, best execution is guaranteed by the integrated architecture of the invention. The combined system serves as a fair market provider for all market participants. It is therefore assured that the usual conflict of interest by market maker driven platforms is avoided.

## Claims

1. Computer system operated in a security trading system (260) providing a reference market, the computer system being arranged for processing orders and comprising:
means for receiving a message indicating a quote, the quote including quote parameters implicitely defining a buy limit order and a sell limit order;
a quote storage (250) for storing the quote parameters;
means for receiving an order; and
a pre-match control unit (255) for determining whether the order matches the quote; the pre-match control unit being arranged for executing the order against the quote if the order matches the quote, or automatically forwarding the order to the reference market for execution if the order does not match the quote.

2. Method of operating a computer system for processing orders in a security trading system (260) providing a reference market, the method comprising the steps of:
receiving (310, 450) a message indicating a quote, the quote including quote parameters implicitely defining a buy limit order and a sell limit order;
storing (450) the quote parameters;
receiving (320, 510) an order;
determining (330, 540, 610-640) whether the order matches the quote;
if so, executing (330, 560, 670) the order against the quote; and
otherwise, automatically generating (330) order data and forwarding (580, 680) the data to the reference market for executing the order.

3. The method according to claim 2, wherein:
the step of receiving the order comprises the step of generating (520) a time stamp and associating the received order with the generated time stamp; and
the steps of executing the order comprise the step of accessing said associated time stamp.

4. The method according to claim 2 or 3, wherein said security trading system includes an order book (260) and the step of executing the order against the quote comprises the steps of:
if the order is a buy order, determining (650, 710) whether order book entries exist that allow for executing at least a part of the order at a price lower than or equal to the execution price that would be applicable when executing the order against the quote;
if the order is a sell order, determining (650, 710) whether order book entries exist that allow for executing at least a part of the order at a price higher than or equal to the execution price that would be applicable when executing the order against the quote; and
if it is determined that such order book entries exist, generating (660, 720) an order for executing said part and automatically forwarding (660, 730) the generated order to the order book for execution.

5. The method according to claim 4, wherein the step of forwarding (660) the generated order to the order book for execution is performed in advance of the execution of the order against the quote.

6. The method according to one of claims 2 to 5, wherein:
the step of determining whether the order matches the quote comprises the step of determining whether the time needed for processing the determination step exceeds a timeout value; and
if the determination step is timed out, returning a determination result value indicating that the order does not match the quote, to indicate that the order is to be automatically forwarded to the reference market for execution.

7. The method according to one of claims 2 to 6, wherein, if the order matches the quote, the order is executed against the quote in its entirety, without partial executions.

8. The method according to one of claims 2 to 7, wherein:
the quote includes a bid leg and an ask leg, each specifying the quote parameters;
one of the quote parameters is a relative limit value that is positive for the bid leg and negative for the ask leg; and
the step of executing the order against the quote comprises the step of determining an execution price depending on the relative limit value.

9. The method according to one of claims 2 to 8, wherein:
the quote includes a bid leg and an ask leg, each specifying the quote parameters;
one of the quote parameters is a boundary value indicating an upper boundary for the bid leg and a lower boundary for the ask leg; and
the step of determining whether the order matches the quote comprises the steps of:
determining the execution price that would be applicable when executing the order against the quote;
determining (630) whether the determined execution price exceeds the upper boundary for the bid leg or falls below the lower boundary for the ask leg; and
if so, returning a determination result value indicating that the order does not match the quote, to indicate that the order is to be automatically forwarded to the reference market for execution.

10. The method according to one of claims 2 to 9, wherein:
said security trading system includes an order book (260);
the quote includes a bid leg and an ask leg, each specifying the quote parameters; one of the quote parameters is a maximum size value indicating the quote size for the order when executing the order against the quote; and
the step of determining whether the order matches the quote comprises the steps of:
if the order is a buy order, comparing the size of the order with the quote size for the ask leg;
if the order is a sell order, comparing the size of the order with the quote size for the bid leg; and
the step of determining whether the order matches the quote comprises the steps of:
determining (640) whether the size of the order exceeds the respective maximum size value; and
if so, returning a determination result value indicating that the order does not match the quote, to indicate that the order is to be automatically forwarded to the order book for execution.

11. The method according to claim 10, wherein the step of determining whether the order matches the quote further comprises the steps of:
determining whether the size of the order exceeds the best bid/best ask order size indicated by the order book; and
if the size of the order exceeds the best bid/best ask order size but not the respective maximum size value, returning a determination result value indicating that the order matches the quote, to indicate that the order is to be executed against the quote;
and wherein the step of executing the order against the quote comprises the steps of:
obtaining the volume weighted average (VWA) value indicating the average execution price for the respective order size if the order would be executed in the order book; and
calculating an execution price for the order based on said volume weighted average value.

12. The method according to claim 10 or 11, wherein the step of determining whether the order matches the quote further comprises the steps of:
determining whether the size of the order exceeds the best bid/best ask order size indicated by the order book; and
if the size of the order falls below the best bid/best ask order size and below the respective maximum size value, returning a determination result value indicating that the order matches the quote, to indicate that the order is to be executed against the quote;
and wherein the step of executing the order against the quote comprises the steps of:
obtaining the best ask/best bid price indicating the execution price for the respective order size if the order would be executed in the order book; and
calculating an execution price for the order based on said best ask/best bid price.

13. The method according to one of claims 2 to 12, wherein:
said security trading system includes an order book (260);
the quote includes a bid leg and an ask leg, each specifying the quote parameters;
one of the quote parameters is a reserve size value indicating the total size of orders that can be executed against the quote without the need of receiving an updated quote message; and
the step of executing the order against the quote comprises the step of reducing the reserve size value by the size of the executed order, for refilling the quote; and
the step of determining whether the order matches the quote comprises the steps of:
determining whether the reserve size value exceeds the maximum order size for the order when executing the order against the quote;
if the reserve size value does not exceed the maximum order size, returning a determination result value indicating that the order does not match the quote, to indicate that the order is to be automatically forwarded to the order book for execution.

14. The method according to one of claims 2 to 13, wherein:
the received order includes an execution identifier (ID) identifying a market participant (230) registered to the computer system as quote specifying entity; and
the step of determining whether the order matches the quote comprises the steps of:
determining (620) the market participant (230) identified by the execution identifier of the received order;
determining (620) the market participant (205-225) that has placed the order; and
determining (620) whether the order placing participant is entitled to have orders executed against the quote; and
if the order placing participant is not entitled, returning a determination result value indicating that the order does not match the quote.

15. The method according to claim 14, wherein the step of determining whether the order matches the quote comprises the step of forwarding the order to the reference market if the order placing participant is not entitled to have orders executed against the quote, thereby inhibiting the order from being executed against the quote.

16. The method according to one of claims 2 to 15, wherein said security trading system includes an order book (260) and the method further comprising the step of:
receiving order book quotes from the market participant (230) that has placed the quote, or from another market participant (220) acting as liquidity manager, to provide additional liquidity in the order book.

17. The method according to one of claims 2 to 16, wherein the step of determining whether the order matches the quote comprises the steps of:
determining (630) the order type of the order;
comparing (630) the determined order type with predetermined order types registered for being executable against the quote; and
if the determined order type does not match one of the predetermined order types, returning a determination result value indicating that the order does not match the quote, to indicate that the order is to be automatically forwarded to the reference market for execution.

18. The method according to one of claims 2 to 17, wherein the step of determining whether the order matches the quote comprises the steps of:
comparing the size of the order with a predefined maximum order size; and
if the size of the order exceeds the maximum order size, returning a determination result value indicating that the order does not match the quote, to indicate that the order is to be automatically forwarded to the reference market for execution.

19. The method according to one of claims 2 to 18, wherein:
the quote has a time identification item associated indicating the time period in which the quote is valid; and
the step of determining whether the order matches the quote comprises the steps of:
determining the time period in which the quote is valid;
determining whether the current time and/or the time indicated by a time stamp of the order is within said time period; and
if the time period has expired, returning a determination result value indicating that the order does not match the quote, to indicate that the order is to be automatically forwarded to the reference market for execution.

20. The method according to one of claims 2 to 19, wherein said security trading system includes an order book (260) and the step of determining whether the order matches the quote comprises the steps of:
determining whether the order is received from a market participant or whether the received order solely became marketable due to modifications in the order book; and
if the received order solely became marketable due to modifications in the order book, returning a determination result value indicating that the order does not match the quote, to indicate that the order is to be automatically forwarded to the order book for execution.

21. The method according to one of claims 2 to 20, wherein the step of determining whether the order matches the quote comprises the steps of:
determining (610) the trading phase of the security trading system at the time the order is received; and
if the determined trading phase indicates a running auction (810) within a continuous trading phase (800), a volatility interruption, or a market order interruption of an auction, returning a determination result value indicating that the order does not match the quote, to indicate that the order is to be automatically forwarded to the reference market for execution.

22. The method according to claim 21, wherein the step of determining whether the order matches the quote comprises the steps of:
determining the potential execution price that would be applicable when executing the order against the quote;
determining a volatility range;
determining whether the potential execution price is within the volatility range;
if the potential execution price lies outside the volatility range, forwarding the order to the reference market and triggering a volatility interruption; and
otherwise, performing a consistency check based on the size of the order relative to the size at the best limit in order to identify orders with a better limit in the reference market, to ensure in-advance execution of these orders.

23. Computer program comprising instructions adapted to perform the method according to one of claims 2 to 22.

24. The computer system according to claim 1, arranged for performing the method of one of claims 2 to 22.

25. The computer system according to claim 23 or 24, further comprising a time stamp generator (235) for generating for any received order a time stamp and associating the time stamp to the order.

26. The computer system according to one of claims 23 to 25, further comprising a preferencer (240) for determining whether a market participant (205-225) from which an order is received is entitled to have the order executed against the quote.

27. The computer system according to claim 26, further comprising a permission storage (245) for storing data indicating which market participant is entitled to have orders executed against what kind of quotes.
